# EUROPEAN PATENT SPECIFICATION

(11) **EP 3 975 554 B1**
(45) Date of publication and mention of the grant of the patent: **06.03.2024**
(21) Application number: 21195230.4
(22) Date of filing: 07.09.2021
(51) Int. Cl.: H04N 7/18, G06Q 10/0635, G06Q 50/26, G06Q 30/0283, G08B 13/196, G06Q 30/04

(54) **SURVEILLANCE DEVICE, SURVEILLANCE SYSTEM, PROGRAM, COMPUTER-READABLE MEDIUM HAVING RECORDED THEREON PROGRAM, AND METHOD**
ÜBERWACHUNGSVORRICHTUNG, ÜBERWACHUNGSSYSTEM, PROGRAMM, COMPUTERLESBARES MEDIUM MIT EINEM DARAUF AUFGEZEICHNETEM PROGRAMM UND VERFAHREN
DISPOSITIF DE SURVEILLANCE, SYSTÈME DE SURVEILLANCE, PROGRAMME, SUPPORT LISIBLE SUR ORDINATEUR SUR LEQUEL EST ENREGISTRÉ UN PROGRAMME ET PROCÉDÉ

(30) Priority: 29.09.2020 JP 2020164043
(43) Date of publication of application: 30.03.2022
(73) Proprietor: YOKOGAWA ELECTRIC CORPORATION, Musashino-shi Tokyo 180-8750 (JP)
(72) Inventor: Kojima, Osamu, Musashino-shi, Tokyo, 180-8750 (JP); Wada, Atsushi, Musashino-shi, Tokyo, 180-8750 (JP)
(74) Representative: Hoffmann Eitle

(56) References cited:
- JP-B1- 6 573 297
- US-A1- 2017 257 223
- Anonymous: "Pricing | Cloud Vision API | Google Cloud", , 23 August 2020 (2020-08-23), pages 1-3, XP055890269, Retrieved from the Internet: URL:http://web.archive.org/web/20200823064 850/https://cloud.google.com/vision/pricin g [retrieved on 2022-02-10]
- Anonymous: "Pricing - Face API | Microsoft Azure", , 8 August 2020 (2020-08-08), pages 1-6, XP055890275, Retrieved from the Internet: URL:http://web.archive.org/web/20200808211 935/https://azure.microsoft.com/en-us/pric ing/details/cognitive-services/face-api/ [retrieved on 2022-02-10]
- Anonymous: "Amazon Rekognition - Pricing - AWS", , 25 August 2020 (2020-08-25), pages 1-10, XP055890279, Retrieved from the Internet: URL:http://web.archive.org/web/20200825191 730/https://aws.amazon.com/rekognition/pri cing/ [retrieved on 2022-02-10] & Anonymous: "Amazon Rekognition Overview Use cases ? Features ? Pricing Resources FAQs Customers Products / Machine Learning / Amazon Rekognition / ...", , 10 February 2022 (2022-02-10), pages 1-7, XP055890287, Retrieved from the Internet: URL:https://aws.amazon.com/rekognition/pri cing/ [retrieved on 2022-02-10]
- VALENTÍN L. ET AL: "A CLOUD-BASED ARCHITECTURE FOR SMART VIDEO SURVEILLANCE", THE INTERNATIONAL ARCHIVES OF THE PHOTOGRAMMETRY, REMOTE SENSING AND SPATIAL INFORMATION SCIENCES, [Online] vol. XLII-4/W3, 4 October 2017 (2017-10-04), pages 99-104, XP055890485, DOI: 10.5194/isprs-archives-XLII-4-W3-99-2017 Retrieved from the Internet: URL:https://pdfs.semanticscholar.org/afad/ 2ca47366c194007fc50a79ed3735cb2119ff.pdf> [retrieved on 2022-02-11]
- Da I P ET AL: "SERVICE MODELS FOR CLOUD COMPUTING: VIDEO SURVEILLANCE AS A SERVICE (VSaaS)", Bulletin of the Transilvania University of Bra@BULLETov @BULLET, 1 January 2016 (2016-01-01), XP055890479, Retrieved from the Internet: URL:https://www.researchgate.net/profile/P redrag-Dasic/publication/310233999_Service _models_for_cloud_computing_Video_Surveill ance_as_a_Service_VSaaS/links/582a568708ae 004f74ae551b/Service-models-for-cloud-comp uting-Video-Surveillance-as-a-Service-VSaa S.pdf [retrieved on 2022-02-11]
- KASKAVALCI HALIL CAN ET AL: "A Deep Learning Based Distributed Smart Surveillance Architecture using Edge and Cloud Computing", 2019 INTERNATIONAL CONFERENCE ON DEEP LEARNING AND MACHINE LEARNING IN EMERGING APPLICATIONS (DEEP-ML), IEEE, 26 August 2019 (2019-08-26), pages 1-6, XP033637980, DOI: 10.1109/DEEP-ML.2019.00009 [retrieved on 2019-10-18]
- Anonymous: "Microsoft Azure", , 8 July 2020 (2020-07-08), XP055890532, Retrieved from the Internet: URL:https://web.archive.org/web/2020070801 0759/https://azure.microsoft.com/en-us/ [retrieved on 2022-02-11]
- LIMNA THANATHIP ET AL: "A flexible and scalable component-based system architecture for video surveillance as a service, running on infrastructure as a service", MULTIMEDIA TOOLS AND APPLICATIONS, KLUWER ACADEMIC PUBLISHERS, BOSTON, US, vol. 75, no. 4, 31 December 2014 (2014-12-31), pages 1765-1791, XP035924536, ISSN: 1380-7501, DOI: 10.1007/S11042-014-2373-8 [retrieved on 2014-12-31]

## Description

### BACKGROUND

### 1. TECHNICAL FIELD

The present invention relates to a surveillance device, a surveillance system, a program, a computer-readable medium having recorded thereon a program, and a method.

### 2. RELATED ART

In the related art, surveillance is performed by using a stand-alone surveillance camera or a surveillance camera that can be connected to a network (for example, refer to Patent Document 1).

Anonymous: "Pricing | Cloud Vision API | Google Cloud", 23 August 2020 (2020-08-23), pages 1-3, Retrieved from the Internet: URL:http://web.archive.org/web/20200823064850/https://cloud.google.com/vision/prici ng relates to Cloud Vision API which provides a set of features for analysing images.

Anonymous: "Pricing - Face API | Microsoft Azure" 8 August 2020 (2020-08-08), pages 1-6, Retrieved from the Internet: URL:http://web.archive.org/web/20200808211935/https://azure.microsoft.com/en-us/pr icing/details/cognitive-services/face-api/ relates to the pricing for cloud-based face algorithms to detect and recognize human faces in images.

Anonymous: "Amazon Rekognition - Pricing - AWS", 25 August 2020 (2020-08-25), pages 1-10, Retrieved from the Internet: URL:http://web.archive.org/web/20200825191730/https://aws.amazon.com/rekognition /pricing/ relates to the pricing for Amazon Rekognition Image.

Valentin L. et al. : "A CLOUD-BASED ARCHITECTURE FOR SMART VIDEO SURVEILLANCE",THE INTERNATIONAL ARCHIVES OF THE PHOTOGRAMMETRY, REMOTE SENSING AND SPATIAL INFORMATION SCIENCES,vol. XLII-4/W3 4 October 2017 (2017-10-04), pages 99-104, relates a modular framework to create processing pipelines for surveillance tasks.

### [Citation List]

### [Patent Document]

Patent Document 1: Japanese Patent Application Publication No. 2015-162232

### [General Disclosure]

The present invention is defined in the appended independent claims. Further preferred embodiments are defined in the dependent claims.

A first aspect of the present invention provides a surveillance device as defined in claim 1.

A second aspect of the present invention provides a surveillance system as defined in claim 4.

A third aspect of the present invention provides a program that is executed by a computer as defined in claim 7.

A fourth aspect of the present invention provides a program that is executed by a computer as defined in claim 8.

A fifth aspect of the present invention provides a method as defined in claim 10.

A sixth aspect of the present invention provides a method as defined in claim 11.

### BRIEF DESCRIPTION OF THE DRAWINGS

Fig. 1 shows a surveillance environment 10 according to the present embodiment.
Fig. 2 shows a configuration of a surveillance device 104 according to the present embodiment.
Fig. 3 shows an operation flow of the surveillance device 104 according to the present embodiment.
Fig. 4 shows a configuration of a surveillance system 150 according to the present embodiment.
Fig. 5 shows an example of a list of a surveillance logic registered by a surveillance logic registration unit 405 in the present embodiment.
Fig. 6 shows an operation flow relating to provision of the surveillance logic in a logic providing terminal 120 of the present embodiment.
Fig. 7 shows an operation flow relating to creation of a surveillance program and a surveillance control program in the surveillance system 150 of the present embodiment.
Fig. 8 shows an operation flow relating to surveillance in the surveillance system 150 of the present embodiment.
Fig. 9 shows an example of a computer 2200 in which a plurality of aspects of the present invention may be embodied entirely or partially.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential for means to solve the problem in the invention.

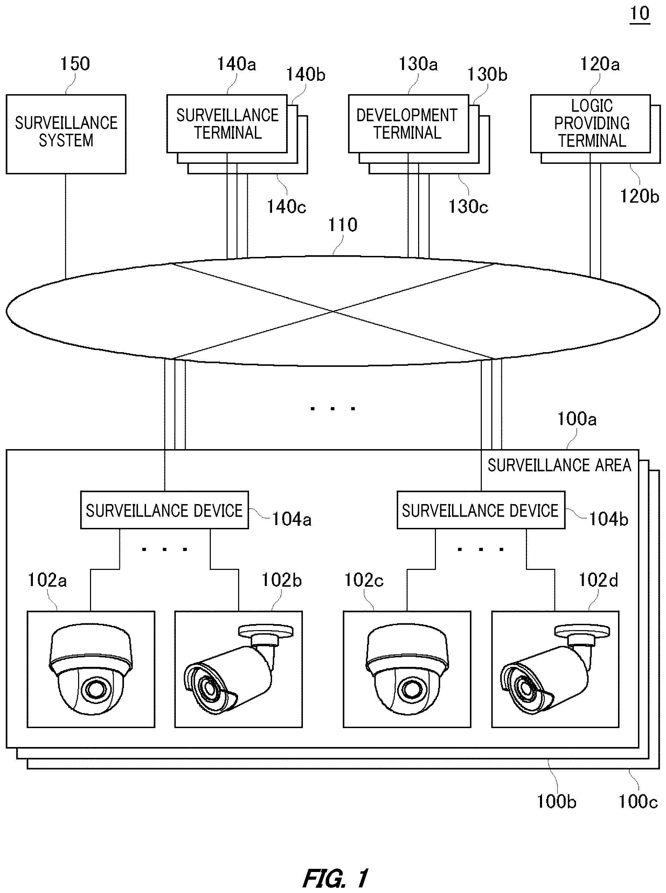

Fig. 1 shows a surveillance environment 10 according to the present embodiment. The surveillance environment 10 makes it possible, for example, for information processing, which relates to security or surveillance in a specific area, to be at least partially realized by edge computing in surveillance devices 104a to 104b that are installed for the security or the like in that area. The surveillance environment 10 includes one or more surveillance areas 100 (surveillance areas 100a to 100c), a network 110, one or more logic providing terminals 120 (logic providing terminals 120a to 120b), one or more development terminals 130 (development terminals 130a to 130c), one or more surveillance terminals 140 (surveillance terminals 140a to 140c), and a surveillance system 150.

Each surveillance area 100 is an area that is a target for security or surveillance. In the present embodiment, as an example, the surveillance area 100 is a site of a facility, but may be a roadway, a sidewalk, or the like. The facility may be a plant, may be a school, a house, a train station, an airport, a museum, a hospital, a store (as an example, a restaurant, a retail store), or the like, or may be a theme park, an amusement park, attraction facilities of these, or the like. An example of the plant includes: in addition to industrial plants relating to chemistry, biotechnology, and the like, plants for managing and controlling wellheads in a gas field, an oil field, and the like, and their surroundings; plants for managing and controlling power generation of hydroelectric power, thermal power, nuclear power, and the like; plants for managing and controlling energy harvesting from solar power, wind power, and the like; plants for managing and controlling water and sewerage, dams, and the like; and the like. Each surveillance area 100 may be run or used by companies or individuals (also referred to as "tenants") different from each other.

Each surveillance area 100 is provided with one or more surveillance cameras 102 (surveillance cameras 102a to 102d) and one or more surveillance devices 104 (surveillance devices 104a to 104b). Each surveillance camera 102 captures an image of an inside of the surveillance area 100 to output the captured image. Here, the captured image may be a still image, or may be a moving image.

Each surveillance device 104 is connected to the one or more surveillance cameras 102, and receives the captured image from each of the connected surveillance cameras 102. In the present embodiment, the surveillance devices 104 are respectively connected to the surveillance cameras 102 by wire by PoE (Power over Ethernet (registered trademark)), other Ethernet (registered trademark), or the like. Instead of this, each surveillance device 104 may be connected to the surveillance camera 102 via a mobile communication network or a wireless network such as a wireless LAN. In the example of this drawing, the surveillance device 104a in the surveillance area 100a is connected to the surveillance camera 102a and the surveillance camera 102b, and the surveillance device 104b is connected to the surveillance camera 102c and the surveillance camera 102d. In addition, each surveillance device 104 may be connected to a sensor device, an audio device, or the like, such as an opening and closing sensor, a microphone, a fingerprint authentication sensor, an acceleration sensor, a speed sensor, a temperature sensor, a pressure sensor, a flow rate sensor, or a vibration sensor, installed in the surveillance area 100.

Each surveillance device 104 analyzes the captured image received from the surveillance camera 102 that is a destination for connection. Each surveillance device 104 is connected to the network 110, and transmits a surveillance result obtained by analyzing the captured image to the surveillance system 150 via the network 110. In the present embodiment, the surveillance device 104 functions as a gateway device for connecting, to the surveillance system 150 via the network 110, the surveillance camera 102 that is a destination for connection. Instead of this, the surveillance device 104 may function as a part of a camera device that is integrated with the surveillance camera 102.

The network 110 may be a network for a wide area such as the Internet or a WAN. The network 110 may be a wireless network including a mobile communication network or the like, and instead of this, the network 110 may be a wired network including the wired Internet or the like.

Each logic providing terminal 120 is connected to the network 110, and is used by a provider that provides a surveillance logic which is responsible for some functions of surveillance processing executed by the surveillance device 104. Here, the surveillance logic may be software such as a program, a library, or a processing model for the surveillance processing. The logic providing terminal 120 is connected to the surveillance system 150 via the network 110, and registers the surveillance logic to provide in the surveillance system 150. The provider of the surveillance logic may be a vendor or a provider that provides the surveillance logic, paid or free, to a company or an individual that carries out the surveillance of the surveillance area 100.

Each development terminal 130 is connected to the surveillance system 150 via the network 110, and is used to develop a surveillance application to be executed by the surveillance system 150 and each surveillance device 104 for the security or the surveillance of the one or more surveillance areas 100. Such a surveillance application includes a surveillance program that is executed by each surveillance device 104, the surveillance logic that is provided by the logic providing terminal 120 to be executed by each surveillance device 104, and a surveillance control program that is executed by the surveillance system 150. When the surveillance environment 10 supports the plurality of tenants, at least one development terminal 130 dedicated to each tenant may be provided.

Each surveillance terminal 140 is connected to the surveillance system 150 via the network 110. Each surveillance terminal 140 displays a surveillance screen that is output by the surveillance system 150 for the security or the surveillance of the one or more surveillance areas 100, and inputs an instruction from security personnel or surveillance personnel to supply the instruction to the surveillance system 150. When the surveillance environment 10 supports the plurality of tenants, at least one surveillance terminal 140 dedicated to each tenant may be provided.

The surveillance system 150 is connected to the network 110. The surveillance system 150 registers the surveillance logic, which is provided by the logic providing terminal 120, to be usable for developing the surveillance application by using the development terminal 130. For the one or more surveillance areas 100 to be collectively managed, the surveillance system 150 shares, with each surveillance device 104 in the surveillance areas 100, the execution of the surveillance application for the surveillance of the surveillance areas 100, and outputs the surveillance screen to the surveillance terminal 140. The surveillance system 150 may be operated by a security company, and may collectively take responsibility for the surveillance of the surveillance area 100 of each company or each individual, the surveillance area 100 being the target for the security which is carried out by the security company. Instead of this, the surveillance system 150 may provide a surveillance platform on which the tenants can respectively log in by using their own accounts and respectively execute surveillance applications dedicated to their own surveillance areas 100.

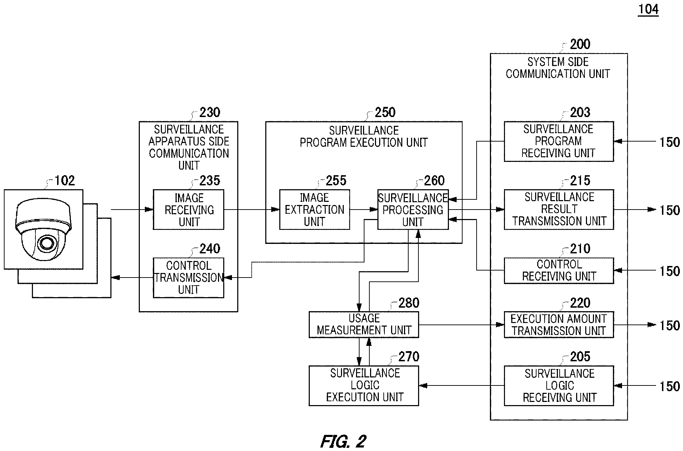

Fig. 2 shows a configuration of a surveillance device 104 according to the present embodiment. In the present embodiment, the surveillance device 104 is realized by a dedicated computer that functions as a gateway device between each surveillance camera 102 and the surveillance system 150 and that has a processor and a communication interface. Instead of this, the surveillance device 104 may be realized by a computer such as a PC (a personal computer). The surveillance device 104 includes a system side communication unit 200, a surveillance apparatus side communication unit 230, a surveillance program execution unit 250, a surveillance logic execution unit 270, and a usage measurement unit 280.

The system side communication unit 200 is connected to the network 110, and communicates with the surveillance system 150 via the network 110. The system side communication unit 200 includes a surveillance program receiving unit 203, a surveillance logic receiving unit 205, a control receiving unit 210, a surveillance result transmission unit 215, and an execution amount transmission unit 220. The surveillance program receiving unit 203 receives, from the surveillance system 150, the surveillance program that carries out the surveillance within a range where the surveillance device 104 is in charge by using the surveillance logic. The surveillance logic receiving unit 205 receives, from the surveillance system 150, the surveillance logic to be executed by the surveillance device 104 to analyze the image of the target for surveillance. The control receiving unit 210 receives a control command to the surveillance device 104, from the surveillance system 150 that executes the surveillance control program. The surveillance result transmission unit 215 transmits the surveillance result of the surveillance device 104 to the surveillance system 150. The execution amount transmission unit 220 transmits an execution amount of the surveillance logic measured in the surveillance device 104, to the surveillance system 150 as an example of a device that performs billing processing in accordance with the execution of the surveillance logic.

The surveillance apparatus side communication unit 230 is connected to each surveillance camera 102, and communicates with each surveillance camera 102. The surveillance apparatus side communication unit 230 includes an image receiving unit 235 and a control transmission unit 240. The image receiving unit 235 receives the image captured by each surveillance camera 102. The control transmission unit 240 transmits the control command to the surveillance camera 102, to the surveillance camera 102 that is a control target.

The surveillance program execution unit 250 is connected to the system side communication unit 200 and the surveillance apparatus side communication unit 230. The surveillance program execution unit 250 receives and executes the surveillance program that is received by the surveillance program receiving unit 203 in the system side communication unit 200. In the present embodiment, the surveillance program execution unit 250 may include a main processor of the surveillance device 104 to execute the surveillance program by the main processor. The surveillance program execution unit 250 includes an image extraction unit 255 and a surveillance processing unit 260.

The image extraction unit 255 extracts a target image to be analyzed by the surveillance logic from the captured image captured by each surveillance camera 102. From the captured image, the image extraction unit 255 extracts, for example, at least one of a region where a person or an animal is shown, a region where a person's face is shown, a region where a vehicle is shown, a region where a vehicle license plate is shown, or another region where the target for which the surveillance should be carried out is shown, and uses the extracted region as the target image to be supplied to the surveillance logic. Here, when the captured image is the moving image, the image extraction unit 255 may extract, from the captured image, for example, a frame in which a person or an animal is shown, to set the extracted frame as the target image, or may further extract, from this frame, a region where a person or an animal is shown, to set the extracted region as the target image. In addition, the image extraction unit 255 may perform conversion processing such as enlargement, reduction, or rotation on the region, in the captured image, where the target for which the surveillance should be carried out is shown, and extract the target image adaptable to an image format that can be input to the surveillance logic. The image extraction unit 255 may extract a plurality of target images from the captured image. The image extraction unit 255 may set, as the extraction target of the target image, a region designated by the surveillance program by the surveillance program execution unit 250 executing the surveillance program.

The surveillance processing unit 260 is connected to the image extraction unit 255, and performs the surveillance processing on each target image according to the surveillance program. When there is an instruction to call the surveillance logic in the surveillance program, the surveillance processing unit 260 instructs the surveillance logic execution unit 270 to call the surveillance logic and causes the target image to be analyzed by the surveillance logic execution unit 270. Here, when at least one sensor device or audio device is connected to the surveillance device 104, the surveillance processing unit 260 may perform the surveillance processing also by using an input from the sensor device or audio device, according to a flow of the surveillance processing programmed in the surveillance program.

In addition, the surveillance processing unit 260 may receive the control command from the surveillance system 150 via the control receiving unit 210, and perform the control in accordance with the control command. For example, according to the control command, the surveillance processing unit 260 may perform the control which relates to the surveillance device 104, such as transmitting, to the surveillance system 150, the captured image received from any of the surveillance cameras 102 in the past. In addition, according to the instruction from the surveillance system 150, the surveillance processing unit 260 may transmit, to at least one surveillance camera 102 via the control transmission unit 240, the control command for on and off operation of image capturing, orientation, zooming, resolution, or various settings, and control the surveillance camera 102. The surveillance processing unit 260 transmits, to the surveillance system 150 via the surveillance result transmission unit 215, the surveillance result on a surveillance device 104 side, which is obtained by executing the surveillance program.

The surveillance logic execution unit 270 receives, from the surveillance processing unit 260, the instruction to call the surveillance logic, and executes the surveillance logic to analyze the image. In the present embodiment, the surveillance logic execution unit 270 includes a sub-processor or an accelerator of the surveillance device 104, and may execute the surveillance logic by the sub-processor or the accelerator. Here, such a sub-processor or accelerator may be hardware dedicated to AI (Artificial Intelligence) processing, and the surveillance logic may be a program or a set of model parameters for causing such hardware dedicated to AI processing to execute learned AI processing.

For example, the surveillance logic implements a model using a neural network such as a fully connected neural network or a CNN (Convolutional Neural Network). By executing such a surveillance logic, the surveillance logic execution unit 270 inputs each pixel value of the target image to each neuron in an input layer, and calculates an output value of each neuron from a plurality of input values for each neuron for each layer from the input layer to an output layer. The surveillance logic execution unit 270 may output the output value from each neuron in the output layer as the surveillance result obtained by the surveillance logic, or may process, for outputting by a predetermined algorithm, the output value from each neuron in the output layer to output the processed output value as the surveillance result. Note that the surveillance logic may implement any other machine learning algorithm, including a support vector machine (SVM), a random forest, gradient boosting, logistic regression, reinforcement learning, or the like.

In this way, the surveillance logic execution unit 270 analyzes the target image, which is extracted by the image extraction unit 255, by executing the surveillance logic. Instead of this, the surveillance logic execution unit 270 may entirely or partially receive the captured image without involving the image extraction unit 255, and execute the surveillance logic to analyze the received image.

When there are the plurality of target images, the surveillance logic execution unit 270 may execute, for each target image, among a plurality of surveillance logics, the surveillance logic in accordance with a type of the target image. For example, when the image extraction unit 255 extracts, from the captured image, the target image including a person's face and the target image including a car license plate according to the instruction by the surveillance program, the surveillance logic execution unit 270 may separately call and execute the surveillance logic that analyzes the image of the person's face to identify the person, and the surveillance logic that analyzes the image of the car license plate to identify the car number. The surveillance logic execution unit 270 transmits an analysis result obtained by the surveillance logic to the surveillance processing unit 260.

The usage measurement unit 280 measures the execution amount of the surveillance logic executed by the surveillance logic execution unit 270. In the present embodiment, the usage measurement unit 280 is connected between the surveillance program execution unit 250 and the surveillance logic execution unit 270, and relays an instruction from the surveillance program execution unit 250 to the surveillance logic execution unit 270 to call the surveillance logic, and a reply of the analysis result from the surveillance logic execution unit 270 to the surveillance program execution unit 250. Instead of this, the usage measurement unit 280 may be connected to either one of the surveillance program execution unit 250 or the surveillance logic execution unit 270, and monitor either one of the surveillance program executed by the surveillance program execution unit 250 or the surveillance logic executed by the surveillance logic execution unit 270 to measure the execution amount of the surveillance logic. In addition, the surveillance system 150 may embed a code for calling the measurement which is performed by the usage measurement unit 280 before calling the surveillance logic or after calling the surveillance logic in the surveillance program such that the usage measurement unit 280 is called before and after the surveillance device 104 calls the surveillance logic.

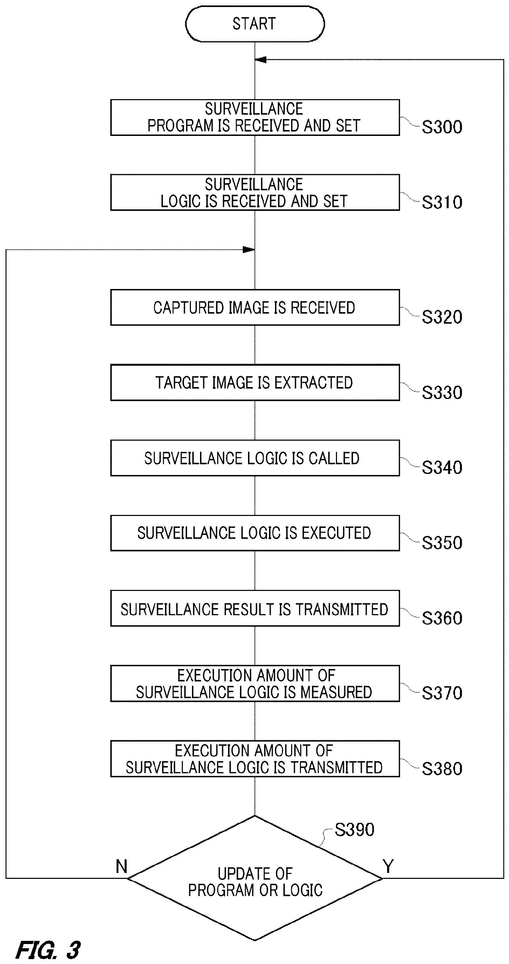

Fig. 3 shows an operation flow of the surveillance device 104 according to the present embodiment. In step 300 (S300), the surveillance program receiving unit 203 receives the surveillance program from the surveillance system 150. The surveillance program execution unit 250 stores the surveillance program in a storage region in the surveillance device 104, and sets the surveillance program to be executable by the surveillance program execution unit 250.

In S310, the surveillance logic receiving unit 205 receives, from the surveillance system 150, one or more surveillance logics scheduled to be used in the surveillance device 104. The surveillance logic execution unit 270 stores the received surveillance logic in a storage region in the surveillance device 104, and sets the received surveillance logic to be executable by the surveillance logic execution unit 270.

In S320, the image receiving unit 235 receives the captured image from the at least one surveillance camera 102. In response to the captured image being received, the surveillance program execution unit 250 activates the surveillance program or resumes an operation of the surveillance program.

In S330, according to the designation by the surveillance program, the image extraction unit 255 extracts, from the captured image, one or more target images to be analyzed by any surveillance logic. In S340, according to the designation by the surveillance program, the surveillance processing unit 260 instructs the surveillance logic execution unit 270 to call, for the one or more target images, the surveillance logic that analyzes the target images. Upon receiving this instruction, the surveillance logic execution unit 270 calls one or more surveillance logics that analyze the one or more target images.

In S350, the surveillance logic execution unit 270 respectively executes the called surveillance logics to analyze the target images. The surveillance logic execution unit 270 returns, to the surveillance processing unit 260, the analysis result of the target image obtained by each surveillance logic. In S360, the surveillance processing unit 260 generates the surveillance result of the surveillance device 104 based on the analysis result of each target image. For example, such as when the person identified by the surveillance logic is not a pre-registered person, or when the car number identified by the surveillance logic is not a pre-registered number, the surveillance processing unit 260 may transmit, to the surveillance system 150, an alert message that a suspicious person or a suspicious vehicle has been found in the surveillance area 100. In addition, when the surveillance logic detects a suspicious behavior of a person in the captured image, the surveillance processing unit 260 may transmit, to the surveillance system 150, an alert message that there is a person who is behaving suspiciously. In addition, the surveillance processing unit 260 may transmit, to the surveillance system 150, the captured image or the target image that is a cause of such an alert.

In S370, the usage measurement unit 280 measures the execution amount of the surveillance logic executed by the surveillance logic execution unit 270. As an example, the usage measurement unit 280 may measure the execution amount based on the number of times the surveillance logic execution unit 270 calls the surveillance logic. In this case, the usage measurement unit 280 may count, for each surveillance logic, the number of times the surveillance logic execution unit 270 transmits the analysis result obtained by the surveillance logic to the surveillance processing unit 260, or may count the number of times of the instruction, from surveillance processing unit 260 to the surveillance logic execution unit 270, to call the surveillance logic.

In addition, the usage measurement unit 280 may measure the execution amount based on a time from an input of the image to the surveillance logic to an output of the analysis result obtained by the surveillance logic. In this case, the usage measurement unit 280 may measure, for each surveillance logic, a time from when the surveillance logic execution unit 270 calls the surveillance logic to when the surveillance logic execution unit 270 transmits the analysis result, and set the time as the execution amount of the surveillance logic. Here, when the surveillance logic execution unit 270 executes the plurality of surveillance logics in a time division manner, the usage measurement unit 280 may measure a net execution time of each surveillance logic. In addition, in consideration of performance of the surveillance logic execution unit 270, for example, the usage measurement unit 280 may set, as the execution amount, a product of the execution time of the surveillance logic and the performance of the surveillance logic execution unit 270.

In S380, the usage measurement unit 280 transmits the execution amount of each surveillance logic to the surveillance system 150. Here, the usage measurement unit 280 may notify the surveillance system 150 of the execution amount of each surveillance logic at a predetermined time interval (for example, every 30 minutes, every day, or the like) or every predetermined number of times of the execution, rather than notify the surveillance system 150 each time the surveillance logic is called.

In S390, the system side communication unit 200 determines whether there is an update of the surveillance program or any surveillance logic. The system side communication unit 200 may check, for example, periodically, with the surveillance system 150 whether there is the update of the surveillance program or the surveillance logic, or may check whether there is the surveillance program or the surveillance logic transmitted from the surveillance system 150 to the surveillance program receiving unit 203 or the surveillance logic receiving unit 205. When there is the update of the surveillance program or the surveillance logic ("Y" in S390), the surveillance device 104 advances processing to S300. When there is no update of the surveillance program or the surveillance logic, the surveillance device 104 may advance the processing to S320, and wait until the subsequent captured image is received. In this case, the surveillance device 104 may suspend the execution of the surveillance program until the subsequent captured image is received, or may shift to a sleep state or the like.

With the surveillance device 104 shown above, the image captured by each surveillance camera 102 is analyzed by the surveillance device 104, and the surveillance result of the surveillance device 104 is reported to the surveillance system 150, and thus there is no need to transmit, to the surveillance system 150, all of the captured images to be analyzed on a surveillance system 150 side. This makes it possible for the surveillance device 104 to reduce a load of the network between the surveillance camera 102 and the surveillance system 150, and a processing load of the surveillance system 150. In addition, in the surveillance device 104, a surveillance program developed for each surveillance device 104 can be installed and executed, and thus it is possible to report, to the surveillance system 150, the surveillance result that is customized according to each surveillance area 100 or an installation place of each surveillance camera 102. Along with this, in comparison with a case where general-purpose surveillance processing is performed, the surveillance device 104 does not need to report unnecessary information to the surveillance system 150, and thus it is possible to reduce the load of the network.

In addition, in the surveillance device 104, a surveillance logic of an AI vendor or the like can be used to perform the surveillance processing in the surveillance device 104, and thus it is possible to shorten a development period of the surveillance application, and to enhance a surveillance accuracy by selecting an appropriate surveillance logic. In addition, the surveillance device 104 can measure the execution amount of the surveillance logic on a surveillance device 104 side, and thus in comparison with a case where the notification is provided to the surveillance system 150 each time the surveillance logic is used, it is possible to reduce the load of the network. In addition, when the plurality of target images of different types are extracted from the captured image, the surveillance device 104 can apply the appropriate surveillance logic to each of the plurality of target images, and thus it is possible to efficiently analyze each target image, and to entirely enhance the surveillance accuracy of the captured image.

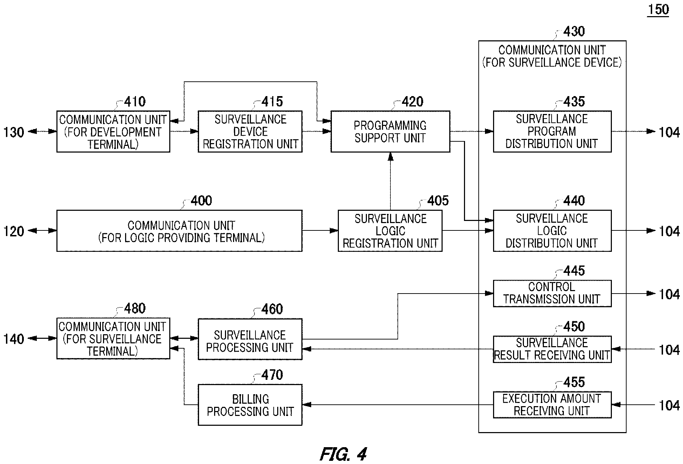

Fig. 4 shows a configuration of a surveillance system 150 according to the present embodiment. The surveillance system 150 shown in this drawing may be used together with the surveillance device 104 of Fig. 2, and may be used together with a surveillance device different from the surveillance device 104 of Fig. 2. In the present embodiment, a case where the surveillance system 150 is used together with the surveillance device 104 of Fig. 2 is illustrated.

The surveillance system 150 may be a computer such as a PC (the personal computer), a workstation, a server computer, or a general-purpose computer, or may be a computer system in which a plurality of computers are connected. Such a computer system is also a computer in a broad sense. In addition, the surveillance system 150 may be implemented by one or more virtual computer environments that can be executed in the computer. Instead of this, the surveillance system 150 may be a dedicated computer designed for the surveillance, or may be dedicated hardware realized by dedicated circuitry.

In addition, the surveillance system 150 may be a cloud computing system that is connected to each surveillance device 104 via the network 110 such as the Internet and that provides a cloud service for the security or the surveillance of each surveillance area 100. Instead of this, functions of the surveillance system 150 may be partially realized by a mobile terminal such as a tablet computer or a smartphone that is used by the security personnel or the surveillance personnel.

The surveillance system 150 includes a communication unit 400 for the logic providing terminal 120, a surveillance logic registration unit 405, a communication unit 410 for the development terminal 130, a surveillance device registration unit 415, a programming support unit 420, a communication unit 430 for the surveillance device 104, a surveillance processing unit 460, a billing processing unit 470, and a communication unit 480 for the surveillance terminal 140. The communication unit 400 is connected to one or more logic providing terminals 120 via the network 110, to communicate with each logic providing terminal 120. When any logic providing terminal 120 provides the developed surveillance logic to the surveillance system 150, the communication unit 400 receives the provided surveillance logic.

The surveillance logic registration unit 405 is connected to the communication unit 400. The surveillance logic registration unit 405 registers the surveillance logic in response to receiving the surveillance logic provided from any logic providing terminal 120. The communication unit 410 is connected to one or more development terminals 130 via the network 110, to communicate with each development terminal 130. For each surveillance area 100, the surveillance device registration unit 415 receives, from the development terminal 130, the designation of at least one of the surveillance devices 104 connected to each surveillance camera 102 in the surveillance area 100, and registers the at least one surveillance device 104 associated with each surveillance area 100.

The programming support unit 420 is connected to the communication unit 410 and the surveillance device registration unit 415. The programming support unit 420 communicates with one or more development terminals 130 via the communication unit 410, to support the development of the surveillance application via the development terminal 130. For the surveillance application, the programming support unit 420 may provide a user of the development terminal 130 with a programming environment, a debugging environment, a simulation environment, and a development environment having a function of providing various libraries, and another function. In addition, the programming support unit 420 may have a search function of searching, from among the plurality of surveillance logics registered by the surveillance logic registration unit 405, for the surveillance logic that meets a user's desired condition for a required function or the like, upon receiving an operation of the development terminal 130 by the user, and build a link for the surveillance logic, which is obtained by the search, to be able to be called from the surveillance program. By providing such a development environment, the programming support unit 420 supports the development of the surveillance program executed by each surveillance device 104 and the surveillance control program executed by the surveillance system 150. In this development support, the programming support unit 420 may acquire, from the surveillance device registration unit 415, identification information of each surveillance device 104 for the target for which the surveillance is carried out by the surveillance application, and support the development of the surveillance program to be executed by each surveillance device 104. Note that for one surveillance application, the programming support unit 420 may assign the same surveillance program to all of the surveillance devices 104 for the target for surveillance, or may respectively assign different surveillance programs to the surveillance devices 104.

The communication unit 430 is connected to one or more surveillance devices 104 via the network 110, to communicate with each surveillance device 104. In addition, the communication unit 430 is connected to the surveillance logic registration unit 405, the programming support unit 420, the surveillance processing unit 460, and the billing processing unit 470. The communication unit 430 has a surveillance program distribution unit 435, a surveillance logic distribution unit 440, a control transmission unit 445, a surveillance result receiving unit 450, and an execution amount receiving unit 455. The surveillance program distribution unit 435 is connected to the programming support unit 420, and distributes the surveillance program, which is developed by using the programming support unit 420, to the surveillance device 104 that is to execute the surveillance program.

The surveillance logic distribution unit 440 is connected to the surveillance logic registration unit 405 and the programming support unit 420. The surveillance logic distribution unit 440 acquires, from the programming support unit 420, information of at least one surveillance logic which is used by the surveillance program developed by using the programming support unit 420, and acquires the surveillance logic from the surveillance logic registration unit 405. Then, the surveillance logic distribution unit 440 distributes, to each of the at least one surveillance device 104 that executes this surveillance program, the surveillance logic which is executed by each surveillance device 104.

The control transmission unit 445 is connected to the surveillance processing unit 460, and transmits, to the surveillance device 104, in response to the instruction of the surveillance control program executed by the surveillance system 150, the control command to the surveillance device 104, or the surveillance camera 102 that is connected to the surveillance device 104. The surveillance result receiving unit 450 receives the surveillance result from each surveillance device 104. The execution amount receiving unit 455 receives, from each surveillance device 104, the execution amount of the surveillance logic in each of the at least one surveillance device 104.

The surveillance processing unit 460 is connected to the surveillance result receiving unit 450, to execute the surveillance control program. According to the surveillance control program, the surveillance processing unit 460 performs the surveillance processing in accordance with the surveillance result received by the surveillance result receiving unit 450. According to the surveillance control program, the surveillance processing unit 460 may generate the control command to the surveillance device 104 or the surveillance camera 102, for example, such as an instruction to change the orientation of the surveillance camera 102 such that a suspicious person is shown, to transmit the generated control command to the corresponding surveillance device 104 via the control transmission unit 445. In addition, according to the surveillance control program, the surveillance processing unit 460 may generate the surveillance screen showing a situation or the like of the surveillance area 100 that is the target for surveillance. For example, when receiving, from the surveillance device 104, an alert that a suspicious person is found, or the like, the surveillance processing unit 460 may perform processing of displaying, on the surveillance screen, the alert and the captured image in which the suspicious person is shown. In addition, in response to receiving, from the surveillance terminal 140, the instruction from the security personnel or the surveillance personnel, the surveillance processing unit 460 performs, according to the surveillance control program, processing in accordance with the instruction.

The billing processing unit 470 is connected to the execution amount receiving unit 455. The billing processing unit 470 performs, for each of the at least one surveillance device 104, the billing processing in accordance with the received execution amount. The communication unit 480 is connected to one or more surveillance terminals 140 via the network 110. In addition, the communication unit 480 is connected to the surveillance processing unit 460 and the billing processing unit 470. The communication unit 480 transmits, to the surveillance terminal 140, the surveillance screen generated by the surveillance processing unit 460, to be displayed by the surveillance terminal 140. In addition, the communication unit 480 receives, from the surveillance terminal 140, the instruction input to the surveillance terminal 140 by the security personnel or the surveillance personnel, to supply the received instruction to the surveillance processing unit 460. In addition, the communication unit 480 transmits, to the surveillance terminal 140, a result of the billing processing by the billing processing unit 470.

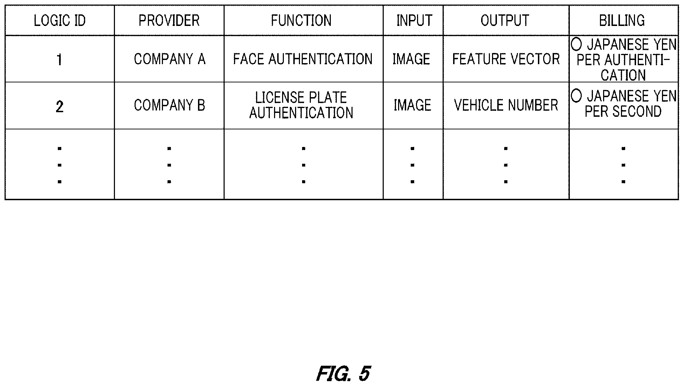

Fig. 5 shows an example of a list of a surveillance logic registered by a surveillance logic registration unit 405 in the present embodiment. For each received surveillance logic which is provided by the logic providing terminal 120, the surveillance logic registration unit 405 records information such as identification information of the surveillance logic (a "logic ID" in the drawing), information such as a name and contact information of the provider (a "provider" in the drawing), information such as a description or an illustration about the function of the surveillance logic (a function in the drawing), information relating to input parameters of the surveillance logic (an "input" in the drawing), information relating to output parameters of the surveillance logic (an "output" in the drawing), information relating to billing for the use of the surveillance logic ("billing" in the drawing).

In the example of this drawing, the surveillance logic with a logic ID of 1 is provided by a company A. This surveillance logic has a function of face authentication, and inputs the image to output a feature vector of a face included in the image. For the execution of this surveillance logic, a billing amount of O Japanese Yen is incurred per authentication.

The surveillance logic with a logic ID of 2 is provided by a company B. This surveillance logic has a function of license plate authentication, inputs the image, and reads, from the license plate of the vehicle included in the image, the vehicle number to be output. For the execution of this surveillance logic, a billing amount of O Japanese Yen is incurred per second of execution time.

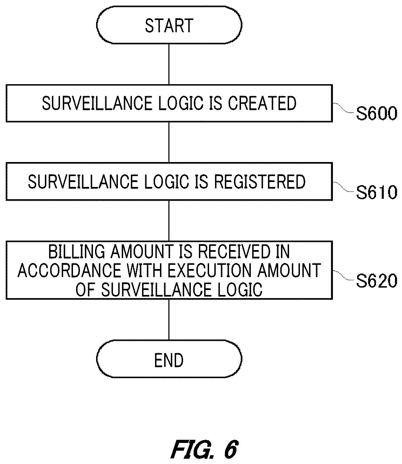

Fig. 6 shows an operation flow relating to provision of the surveillance logic in a logic providing terminal 120 of the present embodiment. In S600, the provider of the surveillance logic creates the surveillance logic by using the logic providing terminal 120 of the provider, another computer connected to the logic providing terminal 120, or the like. In S610, the logic providing terminal 120 receives an operation by the provider, uploads the surveillance logic to the surveillance system 150, and causes the uploaded surveillance logic to be registered in the surveillance system 150. Here, in the registration processing of the surveillance logic, the surveillance system 150 may acquire the information relating to the surveillance logic by causing a registration screen of the surveillance logic to be displayed on the logic providing terminal 120, and receiving input of various information relating to the surveillance logic (for example, each piece of information shown in Fig. 5) on the registration screen, or the like.

In S620, the provider of the surveillance logic receives, as a usage fee for the surveillance logic, at least a part of the billing amount in accordance with the execution amount of the surveillance logic of the provider. When the usage fee for the surveillance logic is transferred by remittance by a bank or the like, the logic providing terminal 120 may receive a transfer report from the surveillance system 150, the bank, or the like.

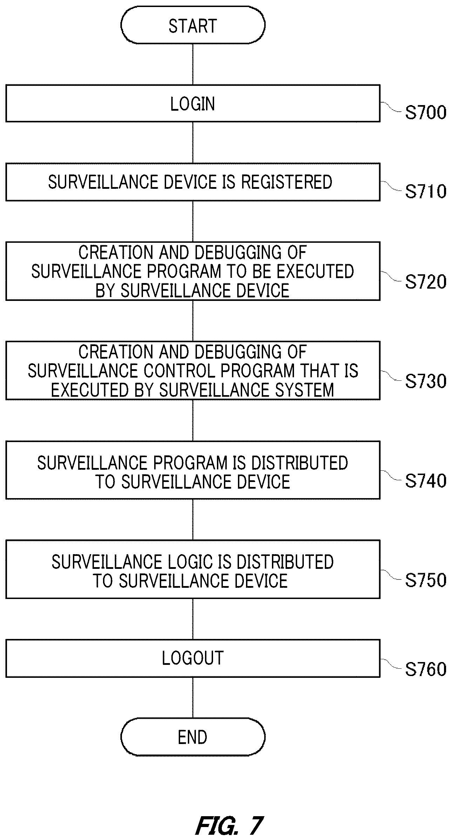

Fig. 7 shows an operation flow relating to creation of a surveillance program and a surveillance control program in the surveillance system 150 of the present embodiment. This operation flow shows a case where the surveillance system 150 assigns an account to each of one or more tenants, receives access performed by using the account, and provides the development environment for developing the surveillance application for the tenant.

In S700, the surveillance system 150 receives, from the development terminal 130 of a certain tenant, a login to the account assigned to the tenant. The surveillance system 150 establishes, in response to a successful login authentication for the account, the development environment of the surveillance application for the tenant, and outputs the screen of the development environment to the development terminal 130.

In S710, the surveillance device registration unit 415 receives, from the development terminal 130 via the communication unit 410, a registration request for the at least one surveillance device 104 to be used in the account. The surveillance device registration unit 415 registers, in response to receiving the registration request, the at least one surveillance device 104 as the surveillance device 104 that can be used in the account. By registering, for each of the plurality of accounts, the at least one surveillance device 104 to be used in the account, the surveillance device registration unit 415 can register the at least one surveillance device 104 different for each account, and arranged in the surveillance areas 100 that are different for each account.

In S720, through an interaction with the user via an input and output to and from the development terminal 130, the programming support unit 420 supports the creation and debugging of the surveillance program to be executed by each surveillance device 104 that is used in the account. When the programming support unit 420 is programmed to call a specific surveillance logic in the surveillance program, the programming support unit 420 associates the surveillance logic, as a target for the surveillance program to call, with the surveillance program. In S730, through an interaction with the user via an input and output to and from the development terminal 130, the programming support unit 420 supports the creation and debugging of the surveillance control program that is executed by the surveillance system 150 for the account.

In S740, the surveillance program distribution unit 435 distributes the created surveillance program to each surveillance device 104 that is to execute the surveillance program. In S750, the surveillance logic distribution unit 440 distributes the at least one surveillance logic, which has a possibility of being called from the created surveillance program, to each surveillance device 104 that is to execute the surveillance logic. Here, the surveillance program distribution unit 435 and the surveillance logic distribution unit 440 may receive, from the programming support unit 420, network address information (for example, an IP address) of each surveillance device 104 in the registration information of each surveillance device 104 registered by the surveillance device registration unit 415, and distribute, to each surveillance device 104, the surveillance program and surveillance logic by using this network address information. Each surveillance device 104 that has received the distribution of the surveillance program and the surveillance logic may start the execution of the surveillance program. In addition, in response to an end of the distribution of the surveillance program and the surveillance logic, the surveillance processing unit 460 may start the execution of the surveillance control program.

In S760, the surveillance system 150 receives a logout from the account via the development terminal 130, and logs out from the account.

With this operation flow, the surveillance system 150 can respectively assign the accounts to the plurality of tenants, to enable the tenants to respectively develop the surveillance applications dedicated to their own surveillance areas 100.

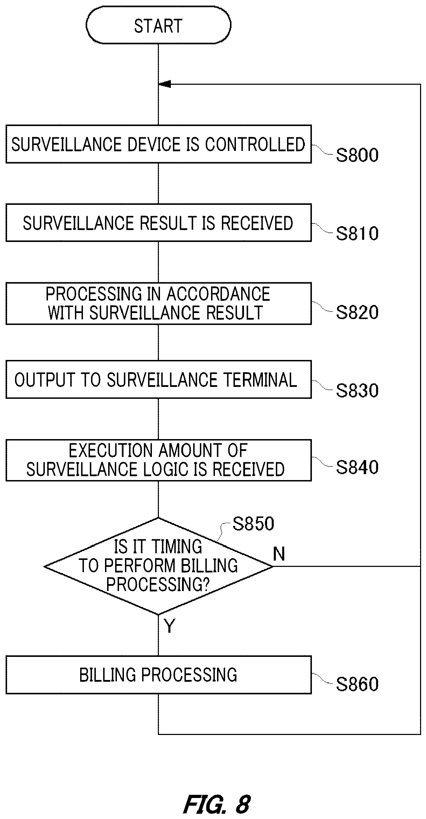

Fig. 8 shows an operation flow relating to surveillance in the surveillance system 150 of the present embodiment. In S800, the surveillance processing unit 460 executes the surveillance control program, and in response to the instruction written in the surveillance control program, transmits the control command to the surveillance device 104 that is the control target. Thereby, the surveillance processing unit 460 controls the surveillance device 104 that is the control target, or the surveillance camera 102 that is connected to the surveillance device 104. Here, for a certain surveillance device 104, when there is no need of a control other than a control by a control program that is executed by the surveillance device 104 itself, the surveillance processing unit 460 may not transmit the control command to the surveillance device 104.

in S810, the surveillance result receiving unit 450 receives the surveillance result from each surveillance device 104. in S820, according to the surveillance control program, the surveillance processing unit 460 performs the surveillance processing in accordance with the surveillance result received by the surveillance result receiving unit 450. The surveillance processing unit 460 may perform, in accordance with the surveillance result, controlling each of the surveillance device 104 and the surveillance camera 102, generating the surveillance screen, processing the instruction of the security personnel or the surveillance personnel, or the like. In S830, the surveillance processing unit 460 outputs, to the surveillance terminal 140 via the communication unit 480, the surveillance screen to be displayed by the surveillance terminal 140.

In S840, the execution amount receiving unit 455 receives the execution amount of the surveillance logic from each surveillance device 104 that has executed the surveillance logic. In S850, the billing processing unit 470 determines whether it is a timing to perform the billing processing. When it is not the timing to perform the billing processing ("N" in S850), the surveillance system 150 advances the processing to S800, and performs the subsequent control (S800) of each surveillance device 104 by the surveillance control program.

Here, for example, the timing of the billing processing may be predetermined timing such as an end of the month and an end of the year, or may be a timing when a total amount to be billed exceeds a predetermined threshold value. Note that when it is not the timing to perform the billing processing in S850, the billing processing unit 470 accumulates and records the execution amount of each surveillance logic received in S840. For example, for the surveillance logic for which the usage fee is incurred in accordance with the number of times of the execution, the billing processing unit 470 may add the number of times of the execution received in S840, to the total number of times of the execution to be billed for. For example, for the surveillance logic in which the usage fee is incurred in accordance with an execution time, the billing processing unit 470 may add the execution time received in S840, to a total of execution time to be billed for.

When it is the timing to perform the billing processing ("Y" in S850), the billing processing unit 470 performs the billing processing in accordance with the received execution amount. Here, the billing processing unit 470 may perform, for each of the plurality of accounts, the billing processing for the account based on the execution amount which is received from each of the at least one surveillance device 104 used in the account. For each account, the billing processing unit 470 may total a billing amount in accordance with the execution amount of all the surveillance logics which are executed in each of all the surveillance devices 104 used in the account, and set the totaled billing amount as the billing amount in accordance with the execution of the surveillance logic for the account. Here, the billing processing unit 470 may calculate a final billing amount based on this billing amount, and by adding or the like, for example, a commission fee, a consumption tax, or the like. The billing processing unit 470 may perform the billing for this account by performing processing of withdrawing this billing amount from a bank account associated with this account, performing processing of charging this billing amount to a credit card associated with this account, performing invoice processing for this account, or the like.

For example, during the execution of the surveillance application that carries out the security of the surveillance area 100a in Fig. 1 in a certain account, the billing processing unit 470 may total the billing amount for each of the one or more surveillance logics executed in each of all the surveillance devices 104 (the surveillance devices 104a to 104b) in the surveillance area 100, and use the totaled billing amount as the billing amount for the use of the surveillance logic in the account.

In addition, the billing processing unit 470 may calculate, for each surveillance logic, the usage fee for each surveillance logic by totaling the billing amounts in accordance with the execution amounts in all the accounts. Here, the billing processing unit 470 may calculate a final usage fee based on this usage fee, and by reducing, for example, a commission fee, or the like. The billing processing unit 470 may send the usage fee of each surveillance logic to each provider by remitting the usage fee of the surveillance logic to the bank account (that is, the account of the provider of the surveillance logic) associated with each surveillance logic, transferring virtual currency equivalent to the usage fee to the logic providing terminal 120, or the like. When the billing processing ends, the surveillance system 150 advances the processing to S800.

With the surveillance system 150 shown above, the processing required by the surveillance application can be partially shared by each surveillance device 104 as the surveillance program and the surveillance logic, and thus it is possible to reduce the processing load of the surveillance system 150. In addition, the surveillance system 150 can receive, from each surveillance device 104, and total the execution amount of the surveillance logic measured by each surveillance device 104, and thus in comparison with a case where the execution amount of all the surveillance logics is measured on the surveillance system 150 side, it is possible to reduce the processing load. In addition, the surveillance system 150 can calculate the billing amount for each account based on the execution amount of the surveillance logic in each surveillance device 104, in comparison with a case where the surveillance logic provider or the like collects, for each account, the execution amount of the surveillance logic in each surveillance device 104, and individually issues the invoice, it is possible to reduce a workload of the invoice processing.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Note that dedicated circuitry may include digital and/or analog hardware circuits, and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), and the like.

A computer-readable medium may include any tangible device that can store instructions to be executed by a suitable device, and as a result, the computer-readable medium having instructions stored thereon comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, etc. More specific examples of computer-readable media may include a floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk(registered trademark), JAVA(registered trademark), C++, etc., and conventional procedural programming languages, such as the "C" programming language or similar programming languages.

Computer-readable instructions may be provided to a processor of a programmable data processing apparatus such as a general-purpose computer, special purpose computer, or another computer, or to programmable circuitry, locally or via a local area network (LAN), wide area network (WAN) such as the Internet, etc., so that the computer-readable instructions are executed to create means for performing operations specified in the flowcharts or block diagrams. Examples of the processor include a computer processor, a processing unit, a microprocessor, a digital signal processor, a controller, a microcontroller, and the like.

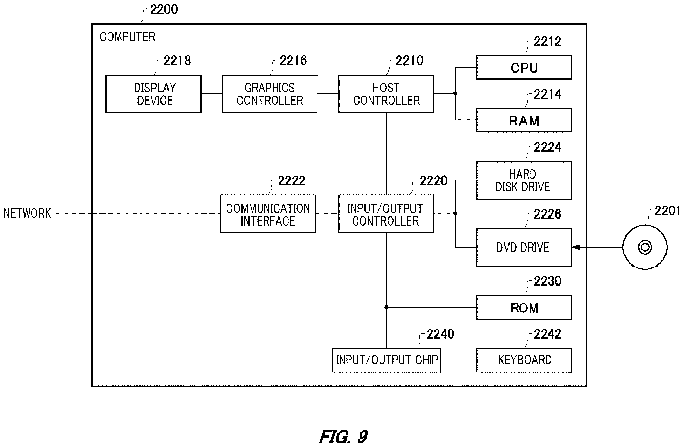

Fig. 9 shows an example of a computer 2200 in which a plurality of aspects of the present invention may be embodied entirely or partially. A program that is installed in the computer 2200 can cause the computer 2200 to function as operations associated with apparatuses according to the embodiments of the present invention or one or more sections of the apparatuses thereof, or can cause the computer 2200 to perform the operations or the one or more sections thereof, and/or can cause the computer 2200 to perform processes of the embodiments according to the present invention or steps of the processes thereof. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads the program and data from an IC card, and/or writes the program and data to the IC card.

The ROM 2230 stores, in itself, a boot program or the like that is executed by the computer 2200 during activation, and/or a program that depends on hardware of the computer 2200. The input/output chip 2240 may also connect various input/output units to the input/output controller 2220 via a parallel port, a serial port, a keyboard port, a mouse port, and the like.

A program is provided by computer-readable media such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. The information processing written in these programs is read into the computer 2200, resulting in cooperation between a program and the above-mentioned various types of hardware resources. An apparatus or method may be constituted by realizing the operation or processing of information in accordance with the usage of the computer 2200.

For example, when a communication is executed between the computer 2200 and an external device, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and perform various types of processing on the data on the RAM 2214. The CPU 2212 then writes back the processed data to the external recording medium.

Various types of information, such as various types of programs, data, tables, and databases, may be stored in the recording medium to undergo information processing. The CPU 2212 may execute various types of processing on the data read from the RAM 2214 to write back a result to the RAM 2214, the processing being described throughout the present disclosure, specified by instruction sequences of the programs, and including various types of operations, information processing, condition determinations, conditional branching, unconditional branching, information retrievals/replacements, or the like. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored in the computer-readable media on the computer 2200 or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10 surveillance environment, 100a to 100c surveillance area, 102a to 102d surveillance camera, 104a to 104b surveillance device, 110 network, 120a to 120b logic providing terminal, 130a to 130c development terminal, 140a to 140c surveillance terminal, 150 surveillance system, 200 system side communication unit, 203 surveillance program receiving unit, 205 surveillance logic receiving unit, 210 control receiving unit, 215 surveillance result transmission unit, 220 execution amount transmission unit, 230 surveillance apparatus side communication unit, 235 image receiving unit, 240 control transmission unit, 250 surveillance program execution unit, 255 image extraction unit, 260 surveillance processing unit, 270 surveillance logic execution unit, 280 usage measurement unit, 400 communication unit, 405 surveillance logic registration unit, 410 communication unit, 415 surveillance device registration unit, 420 programming support unit, 430 communication unit, 435 surveillance program distribution unit, 440 surveillance logic distribution unit, 445 control transmission unit, 450 surveillance result receiving unit, 455 execution amount receiving unit, 460 surveillance processing unit, 470 billing processing unit, 480 communication unit, 2200 computer, 2201 DVD-ROM, 2210 host controller, 2212 CPU, 2214 RAM, 2216 graphics controller, 2218 display device, 2220 input/output controller, 2222 communication interface, 2224 hard disk drive, 2226 DVD-ROM drive, 2230 ROM 2240 input/output chip, 2242 keyboard

## Claims

1. A surveillance device (104) comprising:
a surveillance logic receiving unit (205) configured to receive, from a surveillance system (150) via network (110), one or more surveillance logics to be executed to analyze an image of a target for surveillance;
a surveillance program receiving unit (203) configured to receive, from the surveillance system (150) via the network (110), a surveillance program to carry out surveillance using the one or more surveillance logics;
an image receiving unit (235) configured to receive a captured image captured by a surveillance camera (102);
a surveillance program execution unit (250) configured to store the surveillance program received by the surveillance program receiving unit in a storage region of the surveillance device (104) and activate or resume the surveillance program in response to a reception of the captured image;
an image extraction unit (255) configured to extract, from the captured image a plurality of target images to be analyzed by the one or more surveillance logics;
a surveillance logic execution unit (270) configured to store the one or more surveillance logics received by the surveillance logic receiving unit (205) in the storage region of the surveillance device (104), call surveillance logics,
among the one or more surveillance logics, to analyze the plurality of target images, and execute the called surveillance logics to analyze the plurality of target images;
a surveillance result transmission unit (215) configured to transmit, to the surveillance system (150) via the network (110), a surveillance result obtained by analyzing the plurality of target images;
a usage measurement unit (280) configured to measure an execution amount of the surveillance logic called and executed by the surveillance logic execution unit (270); and
an execution amount transmission unit (220) configured to transmit, to the surveillance system (150) via the network (110) at a predetermined time interval or every predetermined number of times of the execution of the called surveillance logic, the measured execution amount to perform billing processing in accordance with the execution of the called surveillance logic, wherein
the surveillance logic execution unit (270) is configured to execute, among a plurality of the surveillance logics, the surveillance logic in accordance with a type of the target image, for each extracted target image.

2. The surveillance device (104) according to claim 1, wherein
the usage measurement unit (280) is configured to measure the execution amount based on the number of times the surveillance logic execution unit (270) calls the surveillance logic.

3. The surveillance device (104) according to claim 1, wherein
the usage measurement unit (280) is configured to measure the execution amount based on a time from an input of the image to the surveillance logic to an output of an analysis result obtained by the surveillance logic.

4. A surveillance system (150) connected to at least one surveillance device (104) according to any one of claims 1 to 3 to analyze the image of the target for surveillance via the network (110), the surveillance system (150) comprising:
a surveillance logic registration unit (405) configured to register each of the one or more surveillance logics, in response to receiving the one or more surveillance logics;
a surveillance device registration unit (415) configured to register the at least one surveillance device (104);
a surveillance logic distribution unit (440) configured to distribute, to each of the at least one surveillance device (104) via the network (110), the one or more surveillance logics to be executed by each of the at least one surveillance device (104);
an execution amount receiving unit (455) configured to receive, from each of the at least one surveillance device (104) via the network (110) at the predetermined time interval or every predetermined number of times of the execution of the called surveillance logic, the execution amount of the surveillance logic in each of the at least one surveillance device (104); and
a billing processing unit (470) configured to perform, for each of the at least one surveillance device (104), billing processing in accordance with the received execution amount.

5. The surveillance system (150) according to claim 4, wherein
the surveillance device registration unit (415) is configured to register, for each of a plurality of accounts, the at least one surveillance device (104) to be used in the account, and
the billing processing unit (470) is configured to perform, for each of the plurality of accounts, the billing processing for the account based on the execution amount which is received from each of the at least one surveillance device (104) used in the account.

6. The surveillance system (150) according to claim 4 or 5, further comprising:
a programming support unit (420) configured to support a creation of a surveillance program that is executed by the surveillance device (104), for performing surveillance by using the surveillance logic.

7. A program that is executed by a computer and causes the computer to function as:
a surveillance logic receiving unit (205) configured to receive, from a surveillance system (150) via a network (110), one or more surveillance logics to be executed to analyze an image of a target for surveillance;
a surveillance program receiving unit (203) configured to receive, from the surveillance system (150) via the network (110), a surveillance program to carry out surveillance using the one or more surveillance logics;
an image receiving unit (235) configured to receive a captured image captured by a surveillance camera (102);
a surveillance program execution unit (250) configured to store the surveillance program received by the surveillance program receiving unit in a storage region of the surveillance device (104) and activate or resume the surveillance program in response to a reception of the captured image;
an image extraction unit (255) configured to extract, from the captured image captured by the surveillance camera (102), a plurality of target images to be analyzed by the one or more surveillance logics;
a surveillance logic execution unit (270) configured to store the one or more surveillance logics received by the surveillance logic receiving unit (205) in the storage region of the surveillance device (104), call surveillance logics,
among the one or more surveillance logics, to analyze the plurality of target images, and execute the called surveillance logics to analyze the plurality of target images;
a surveillance result transmission unit (215) configured to transmit, to the surveillance system (150) via the network (110), a surveillance result obtained by analyzing the plurality of target images;
a usage measurement unit (280) configured to measure an execution amount of the surveillance logic called and executed by the surveillance logic execution unit (270); and
an execution amount transmission unit (220) configured to transmit, to the surveillance system (150) via the network (110) at a predetermined time interval or every predetermined number of times of the execution of the called surveillance logic, the measured execution amount to perform billing processing in accordance with the execution of the called surveillance logic, wherein
the surveillance logic execution unit (270) is configured to execute, among a plurality of the surveillance logics, the surveillance logic in accordance with a type of the target image, for each extracted target image.

8. A program that is executed by a computer and causes the computer to function as a surveillance system (150) connected to at least one surveillance device (104) according to any one of claims 1 to 3 to analyze the image of the target for surveillance via the network (110), the surveillance system (150) comprising:
a surveillance logic registration unit (405) configured to register each of the one or more surveillance logics, in response to receiving the one or more surveillance logics;
a surveillance device registration unit (415) configured to register the at least one surveillance device (104);
a surveillance logic distribution unit (440) configured to distribute, to each of the at least one surveillance device (104) via the network (110), the one or more surveillance logics to be executed by each of the at least one surveillance device (104);
an execution amount receiving unit (455) configured to receive, from each of the at least one surveillance device (104) via the network (110) at the predetermined time interval or every predetermined number of times of the execution of the called surveillance logic, the execution amount of the surveillance logic in each of the at least one surveillance device (104); and
a billing processing unit (470) configured to perform, for each of the at least one surveillance device (104), billing processing in accordance with the received execution amount.

9. A computer-readable medium having recorded thereon the program according to claim 7 or 8.

10. A method comprising:
receiving, by a surveillance device (104) from a surveillance system (150) via a network (110), one or more surveillance logics to be executed to analyze an image of a target for surveillance;
receiving, by the surveillance device (104), from the surveillance system (150) via the network (110), a surveillance program to carry out surveillance using the one or more surveillance logics;
receiving, by the surveillance device (104), a captured image captured by a surveillance camera (102);
storing, by the surveillance device (104), the received surveillance program in a storage region of the surveillance device (104) and activating or resuming the surveillance program in response to a reception of the captured image;
extracting, by the surveillance device (104), from the captured image captured by the surveillance camera (102), a plurality of target images to be analyzed by the one or more surveillance logics;
storing, by the surveillance device (104), the received one or more surveillance logics in the storage region of the surveillance device (104), calling surveillance logics,
among the one or more surveillance logics, to analyze the plurality of target images, and executing, by the surveillance device (104), the called surveillance logics legie to analyze the plurality of target images;
transmitting, by the surveillance device (104) to the surveillance system (150) via the network (110), a surveillance result obtained by analyzing the plurality of target images;
measuring, by the surveillance device (104), an execution amount of the called and executed surveillance logic; and
transmitting, by the surveillance device (104) to the surveillance system (150) via the network (110) at a predetermined time interval or every predetermined number of times of the execution of the called surveillance logic, the measured execution amount to perform billing processing in accordance with the execution of the called surveillance logic, wherein
for each extracted target image, the surveillance logic in accordance with a type of the target image, among a plurality of the surveillance logics, is executed.

11. A method comprising:
registering, by a surveillance system (150) connected to at least one surveillance device (104) according to any one of claims 1 to 3 to analyze the image of the target for surveillance via the network (110), each of the one or more surveillance logics, in response to receiving the one or more surveillance logics;
registering, by the surveillance system (150), the at least one surveillance device (104);
distributing, by the surveillance system (150), to each of the at least one surveillance device (104) via the network (110), the one or more surveillance logics to be executed by each of the at least one surveillance device (104);
receiving, by the surveillance system (150), from each of the at least one surveillance device (104) via the network (110) at the predetermined time interval or every predetermined number of times of the execution of the called surveillance logic, the execution amount of the surveillance logic in each of the at least one surveillance device (104); and
performing, by the surveillance system (150), for each of the at least one surveillance device (104), billing processing in accordance with the received execution amount.

## Patentansprüche

1. Überwachungsvorrichtung (104), umfassend:
eine Überwachungslogik-Empfangseinheit (205), die so konfiguriert ist, dass sie von einem Überwachungssystem (150) über ein Netzwerk (110) eine oder mehrere Überwachungslogiken empfängt, die ausgeführt werden sollen, um ein Bild eines Zieles der Überwachung zu analysieren;
eine Überwachungsprogramm-Empfangseinheit (203), die so konfiguriert ist, dass sie von dem Überwachungssystem (150) über das Netzwerk (110) ein Überwachungsprogramm empfängt, um eine Überwachung unter Verwendung der einen oder mehreren Überwachungslogiken auszuführen;
eine Bildempfangseinheit (235), die so konfiguriert ist, dass sie ein aufgenommenes Bild empfängt, das von einer Überwachungskamera (102) aufgenommen wurde;
eine Überwachungsprogramm-Ausführungseinheit (250), die so konfiguriert ist, dass sie das von der Überwachungsprogramm-Empfangseinheit empfangene Überwachungsprogramm in einem Speicherbereich der Überwachungsvorrichtung (104) speichert und das Überwachungsprogramm als Reaktion auf einen Empfang des aufgenommenen Bildes aktiviert oder fortsetzt;
eine Bildextraktionseinheit (255), die so konfiguriert ist, dass sie aus dem aufgenommenen Bild eine Vielzahl von Zielbildern extrahiert, die von der einen oder den mehreren Überwachungslogiken zu analysieren sind;
eine Überwachungslogik-Ausführungseinheit (270), die so konfiguriert ist, dass sie die eine oder mehreren von der Überwachungslogik-Empfangseinheit (205) empfangenen Überwachungslogiken in dem Speicherbereich der Überwachungsvorrichtung (104) speichert, Überwachungslogiken aus der einen oder den mehreren Überwachungslogiken aufruft, um die Vielzahl von Zielbildern zu analysieren, und die aufgerufenen Überwachungslogiken ausführt, um die Vielzahl von Zielbildern zu analysieren;
eine Überwachungsergebnis-Übertragungseinheit (215), die so konfiguriert ist, dass sie an das Überwachungssystem (150) über das Netzwerk (110) ein Überwachungsergebnis überträgt, das durch Analysieren der Vielzahl von Zielbildern erhalten wird;
eine Verwendungsmesseinheit (280), die so konfiguriert ist, dass sie eine Ausführungsmenge der Überwachungslogik misst, die von der Überwachungslogik-Ausführungseinheit (270) aufgerufen und ausgeführt wird; und
eine Ausführungsmenge-Übertragungseinheit (220), die so konfiguriert ist, dass sie dem Überwachungssystem (150) über das Netzwerk (110) in einem vorbestimmten Zeitintervall oder jede vorbestimmte Anzahl von Malen der Ausführung der aufgerufenen Überwachungslogik die gemessene Ausführungsmenge überträgt, um eine Abrechnungsverarbeitung in Übereinstimmung mit der Ausführung der aufgerufenen Überwachungslogik durchzuführen, wobei
die Überwachungslogik-Ausführungseinheit (270) so konfiguriert ist, dass sie unter einer Vielzahl der Überwachungslogiken die Überwachungslogik in Übereinstimmung mit einem Typ des Zielbildes für jedes extrahierte Zielbild ausführt.

2. Überwachungsvorrichtung (104) nach Anspruch 1, wobei
die Verwendungsmesseinheit (280) so konfiguriert ist, dass sie die Ausführungsmenge basierend auf der Anzahl der Aufrufe der Überwachungslogik durch die Überwachungslogik-Ausführungseinheit (270) misst.

3. Überwachungsvorrichtung (104) nach Anspruch 1, wobei
die Verwendungsmesseinheit (280) so konfiguriert ist, dass sie die Ausführungsmenge basierend auf einer Zeit von einer Eingabe des Bildes in die Überwachungslogik bis zu einer Ausgabe eines von der Überwachungslogik erhaltenen Analyseergebnisses misst.

4. Überwachungssystem (150), das mit mindestens einer Überwachungsvorrichtung (104) nach einem der Ansprüche 1 bis 3 verbunden ist, um das Bild des Ziels der Überwachung über das Netzwerk (110) zu analysieren, wobei das Überwachungssystem (150) umfasst:
eine Überwachungslogik-Registrierungseinheit (405), die so konfiguriert ist, dass sie jede der einen oder mehreren Überwachungslogiken als Reaktion auf das Empfangen der einen oder mehreren Überwachungslogiken registriert;
eine Überwachungsvorrichtung-Registrierungseinheit (415), die so konfiguriert ist, dass sie die mindestens eine Überwachungsvorrichtung (104) registriert;
eine Überwachungslogik-Verteilungseinheit (440), die so konfiguriert ist, dass sie an jede der mindestens einen Überwachungsvorrichtung (104) über das Netzwerk (110) die eine oder mehreren Überwachungslogiken verteilt, die von jeder der mindestens einen Überwachungsvorrichtung (104) auszuführen ist/sind;
eine Ausführungsmenge-Empfangseinheit (455), die so konfiguriert ist, dass sie von jeder der mindestens einen Überwachungsvorrichtung (104) über das Netzwerk (110) in dem vorbestimmten Zeitintervall oder jede vorbestimmte Anzahl von Malen der Ausführung der aufgerufenen Überwachungslogik die Ausführungsmenge der Überwachungslogik in jeder der mindestens einen Überwachungsvorrichtung (104) empfängt; und
eine Abrechnungsverarbeitungseinheit (470), die so konfiguriert ist, dass sie für jede der mindestens einen Überwachungsvorrichtung (104) eine Abrechnungsverarbeitung in Übereinstimmung mit der empfangenen Ausführungsmenge durchführt.

5. Überwachungssystem (150) nach Anspruch 4, wobei
die Überwachungsvorrichtung-Registrierungseinheit (415) so konfiguriert ist, dass sie für jedes einer Vielzahl von Konten die mindestens eine Überwachungsvorrichtung (104) registriert, die in dem Konto verwendet werden soll, und
die Abrechnungsverarbeitungseinheit (470) so konfiguriert ist, dass sie für jedes der Vielzahl von Konten die Abrechnungsverarbeitung für das Konto basierend auf der Ausführungsmenge durchführt, die von jeder der mindestens einen Überwachungsvorrichtung (104), die in dem Konto verwendet wird, empfangen wird.

6. Überwachungssystem (150) nach Anspruch 4 oder 5, weiter umfassend:
eine Programmierunterstützungseinheit (420), die so konfiguriert ist, dass sie eine Erstellung eines Überwachungsprogramms unterstützt, das von der Überwachungsvorrichtung (104) ausgeführt wird, um eine Überwachung unter Verwendung der Überwachungslogik durchzuführen.

7. Programm, das von einem Computer ausgeführt wird und den Computer veranlasst, zu funktionieren als:
eine Überwachungslogik-Empfangseinheit (205), die so konfiguriert ist, dass sie von einem Überwachungssystem (150) über ein Netzwerk (110) eine oder mehrere Überwachungslogiken empfängt, die ausgeführt werden sollen, um ein Bild eines Ziels der Überwachung zu analysieren;
eine Überwachungsprogramm-Empfangseinheit (203), die so konfiguriert ist, dass sie von dem Überwachungssystem (150) über das Netzwerk (110) ein Überwachungsprogramm empfängt, um eine Überwachung unter Verwendung der einen oder mehreren Überwachungslogiken auszuführen;
eine Bildempfangseinheit (235), die so konfiguriert ist, dass sie ein aufgenommenes Bild empfängt, das von einer Überwachungskamera (102) aufgenommen wurde;
eine Überwachungsprogramm-Ausführungseinheit (250), die so konfiguriert ist, dass sie das von der Überwachungsprogramm-Empfangseinheit empfangene Überwachungsprogramm in einem Speicherbereich der Überwachungsvorrichtung (104) speichert und das Überwachungsprogramm als Reaktion auf einen Empfang des aufgenommenen Bildes aktiviert oder fortsetzt;
eine Bildextraktionseinheit (255), die so konfiguriert ist, dass sie aus dem aufgenommenen Bild, das von der Überwachungskamera (102) aufgenommen wurde, eine Vielzahl von Zielbildern extrahiert, die von der einen oder den mehreren Überwachungslogiken zu analysieren sind;
eine Überwachungslogik-Ausführungseinheit (270), die so konfiguriert ist, dass sie die eine oder mehreren von der Überwachungslogik-Empfangseinheit (205) empfangenen Überwachungslogiken in dem Speicherbereich der Überwachungsvorrichtung (104) speichert, Überwachungslogiken aus der einen oder den mehreren Überwachungslogiken aufruft, um die Vielzahl von Zielbildern zu analysieren, und die aufgerufenen Überwachungslogiken ausführt, um die Vielzahl von Zielbildern zu analysieren;
eine Überwachungsergebnis-Übertragungseinheit (215), die so konfiguriert ist, dass sie an das Überwachungssystem (150) über das Netzwerk (110) ein Überwachungsergebnis überträgt, das durch Analysieren der Vielzahl von Zielbildern erhalten wird;
eine Verwendungsmesseinheit (280), die so konfiguriert ist, dass sie eine Ausführungsmenge der Überwachungslogik misst, die von der Überwachungslogik-Ausführungseinheit (270) aufgerufen und ausgeführt wird; und
eine Ausführungsmenge-Übertragungseinheit (220), die so konfiguriert ist, dass sie dem Überwachungssystem (150) über das Netzwerk (110) in einem vorbestimmten Zeitintervall oder jede vorbestimmte Anzahl von Malen der Ausführung der aufgerufenen Überwachungslogik die gemessene Ausführungsmenge überträgt, um eine Abrechnungsverarbeitung in Übereinstimmung mit der Ausführung der aufgerufenen Überwachungslogik durchzuführen, wobei
die Überwachungslogik-Ausführungseinheit (270) so konfiguriert ist, dass sie unter einer Vielzahl der Überwachungslogiken die Überwachungslogik in Übereinstimmung mit einem Typ des Zielbildes für jedes extrahierte Zielbild ausführt.

8. Programm, das von einem Computer ausgeführt wird und den Computer veranlasst, als Überwachungssystem (150) zu funktionieren, das mit mindestens einer Überwachungsvorrichtung (104) nach einem der Ansprüche 1 bis 3 verbunden ist, um das Bild des Ziels der Überwachung über das Netzwerk (110) zu analysieren, wobei das Überwachungssystem (150) umfasst:
eine Überwachungslogik-Registrierungseinheit (405), die so konfiguriert ist, dass sie jede der einen oder mehreren Überwachungslogiken als Reaktion auf das Empfangen der einen oder mehreren Überwachungslogiken registriert;
eine Überwachungsvorrichtung-Registrierungseinheit (415), die so konfiguriert ist, dass sie die mindestens eine Überwachungsvorrichtung (104) registriert;
eine Überwachungslogik-Verteilungseinheit (440), die so konfiguriert ist, dass sie an jede der mindestens einen Überwachungsvorrichtung (104) über das Netzwerk (110) die eine oder mehreren Überwachungslogiken verteilt, die von jeder der mindestens einen Überwachungsvorrichtung (104) auszuführen ist/sind;
eine Ausführungsmenge-Empfangseinheit (455), die so konfiguriert ist, dass sie von jeder der mindestens einen Überwachungsvorrichtung (104) über das Netzwerk (110) in dem vorbestimmten Zeitintervall oder jede vorbestimmte Anzahl von Malen der Ausführung der aufgerufenen Überwachungslogik die Ausführungsmenge der Überwachungslogik in jeder der mindestens einen Überwachungsvorrichtung (104) empfängt; und
eine Abrechnungsverarbeitungseinheit (470), die so konfiguriert ist, dass sie für jede der mindestens einen Überwachungsvorrichtung (104) eine Abrechnungsverarbeitung in Übereinstimmung mit der empfangenen Ausführungsmenge durchführt.

9. Computerlesbares Medium, auf dem das Programm nach Anspruch 7 oder 8 aufgezeichnet ist.

10. Verfahren, umfassend:
Empfangen einer oder mehrerer Überwachungslogiken, die auszuführen ist/sind, um ein Bild eines Ziels der Überwachung zu analysieren, durch eine Überwachungsvorrichtung (104) von einem Überwachungssystem (150) über ein Netzwerk (110);
Empfangen eines Überwachungsprogramms durch die Überwachungsvorrichtung (104) von dem Überwachungssystem (150) über das Netzwerk (110), um eine Überwachung unter Verwendung der einen oder mehreren Überwachungslogiken auszuführen;
Empfangen, durch die Überwachungsvorrichtung (104), eines aufgenommenen Bildes, das von einer Überwachungskamera (102) aufgenommen wurde;
Speichern des empfangenen Überwachungsprogramms durch die Überwachungsvorrichtung (104) in einem Speicherbereich der Überwachungsvorrichtung (104) und Aktivieren oder Fortsetzen des Überwachungsprogramms als Reaktion auf einen Empfang des aufgenommenen Bildes;
Extrahieren einer Vielzahl von Zielbildern, die von der einen oder den mehreren Überwachungslogiken zu analysieren sind, durch die Überwachungsvorrichtung (104) aus dem aufgenommenen Bild, das von der Überwachungskamera (102) aufgenommen wurde;
Speichern der empfangenen einen oder mehreren Überwachungslogiken in dem Speicherbereich der Überwachungsvorrichtung (104) durch die Überwachungsvorrichtung (104), Aufrufen von Überwachungslogiken aus der einen oder den mehreren Überwachungslogiken, um die Vielzahl von Zielbildern zu analysieren, und Ausführen der aufgerufenen Überwachungslogiken durch die Überwachungsvorrichtung (104), um die Vielzahl von Zielbildern zu analysieren;
Übertragen, durch die Überwachungsvorrichtung (104) an das Überwachungssystem (150) über das Netzwerk (110), eines Überwachungsergebnisses, das durch Analysieren der Vielzahl von Zielbildern erhalten wird;
Messen, durch die Überwachungsvorrichtung (104), einer Ausführungsmenge der aufgerufenen und ausgeführten Überwachungslogik; und
Übertragen, durch die Überwachungsvorrichtung (104), an das Überwachungssystem (150) über das Netzwerk (110) in einem vorbestimmten Zeitintervall oder jede vorbestimmte Anzahl von Malen der Ausführung der aufgerufenen Überwachungslogik, der gemessenen Ausführungsmenge, um eine Abrechnungsverarbeitung in Übereinstimmung mit der Ausführung der aufgerufenen Überwachungslogik durchzuführen, wobei
für jedes extrahierte Zielbild die Überwachungslogik in Übereinstimmung mit einem Typ des Zielbildes unter einer Vielzahl der Überwachungslogiken ausgeführt wird.

11. Verfahren, umfassend:
Registrieren, durch ein Überwachungssystem (150), das mit mindestens einer Überwachungsvorrichtung (104) nach einem der Ansprüche 1 bis 3 verbunden ist, um das Bild des Ziels der Überwachung über das Netzwerk (110) zu analysieren, jeder der einen oder mehreren Überwachungslogiken, als Reaktion auf das Empfangen der einen oder mehreren Überwachungslogiken;
Registrieren, durch das Überwachungssystem (150), der mindestens einen Überwachungsvorrichtung (104);
Verteilen der einen oder mehreren Überwachungslogiken, die von jeder der mindestens einen Überwachungsvorrichtung (104) auszuführen ist/sind, durch das Überwachungssystem (150) an jede der mindestens einen Überwachungsvorrichtung (104) über das Netzwerk (110);
Empfangen der Ausführungsmenge der Überwachungslogik in jeder der mindestens einen Überwachungsvorrichtung (104) durch das Überwachungssystem (150) von jeder der mindestens einen Überwachungsvorrichtung (104) über das Netzwerk (110) in dem vorbestimmten Zeitintervall oder jede vorbestimmte Anzahl von Malen der Ausführung der aufgerufenen Überwachungslogik; und
Durchführen, durch das Überwachungssystem (150), für jede der mindestens einen Überwachungsvorrichtung (104), einer Abrechnungsverarbeitung in Übereinstimmung mit der empfangenen Ausführungsmenge.

## Revendications

1. Dispositif de surveillance (104) comprenant :
une unité de réception de logique de surveillance (205) configurée de manière à recevoir, en provenance d'un système de surveillance (150) par l'intermédiaire d'un réseau (110), une ou plusieurs logiques de surveillance à exécuter pour analyser une image d'une cible à surveiller ;
une unité de réception de programme de surveillance (203) configurée de manière à recevoir, en provenance du système de surveillance (150) par l'intermédiaire du réseau (110), un programme de surveillance pour réaliser la surveillance en utilisant les une ou plusieurs logiques de surveillance ;
une unité de réception d'image (235) configurée de manière à recevoir une image capturée capturée par une caméra de surveillance (102) ;
une unité d'exécution de programme de surveillance (250) configurée de manière à stocker le programme de surveillance reçu par l'unité de réception de programme de surveillance dans une région de stockage du dispositif de surveillance (104) et à activer ou à reprendre le programme de surveillance en réponse à la réception de l'image capturée ;
une unité d'extraction d'image (255) configurée de manière à extraire, à partir de l'image capturée une pluralité d'images cibles à analyser par les une ou plusieurs logiques de surveillance ;
une unité d'exécution de logique de surveillance (270) configurée de manière à stocker les une ou plusieurs logiques de surveillance reçues par l'unité de réception de logique de surveillance (205) dans la zone de stockage du dispositif de surveillance (104), à appeler des logiques de surveillance, parmi les une ou plusieurs logiques de surveillance, à analyser la pluralité d'images cibles, et à exécuter les logiques de surveillance appelées pour analyser la pluralité d'image cibles ;
une unité de transmission de résultat de surveillance (215) configurée de manière à transmettre, au système de surveillance (150) par l'intermédiaire du réseau (110), un résultat de surveillance obtenu en analysant la pluralité d'images cibles ;
une unité de mesure d'utilisation (280) configurée de manière à mesurer une quantité d'exécution de la logique de surveillance appelée et exécutée par l'unité d'exécution de logique de surveillance (270) ; et
une unité de transmission de quantité d'exécution (220) configurée de manière à transmettre, au système de surveillance (150) par l'intermédiaire du réseau (110) à un intervalle de temps prédéterminé ou à chaque nombre de fois prédéterminé où la logique de surveillance appelée est exécutée, la quantité d'exécution mesurée pour mettre en oeuvre un traitement de facturation conformément à l'exécution de la logique de surveillance appelée, dans lequel
l'unité d'exécution de logique de surveillance (270) est configurée de manière à exécuter, parmi une pluralité de logiques de surveillance, la logique de surveillance en fonction d'un type d'image cible, pour chaque image cible extraite.

2. Dispositif de surveillance (104) selon la revendication 1, dans lequel
l'unité de mesure d'utilisation (280) est configurée de manière à mesurer la quantité d'exécution sur la base du nombre de fois où l'unité d'exécution de logique de surveillance (270) appelle la logique de surveillance.

3. Dispositif de surveillance (104) selon la revendication 1, dans lequel
l'unité de mesure d'utilisation (280) est configurée de manière à mesurer la quantité d'exécution en fonction d'un temps entre une entrée de l'image dans la logique de surveillance et une sortie d'un résultat d'analyse obtenu par la logique de surveillance.

4. Système de surveillance (150) connecté à au moins un dispositif de surveillance (104) selon l'une quelconque des revendications 1 à 3 pour analyser l'image de la cible à surveiller par l'intermédiaire du réseau (110), le système de surveillance (150) comprenant :
une unité d'enregistrement de logique de surveillance (405) configurée de manière à enregistrer chacune des une ou plusieurs logiques de surveillance, en réponse à la réception des une ou plusieurs logiques de surveillance ;
une unité d'enregistrement de dispositif de surveillance (415) configurée de manière à enregistrer le au moins un dispositif de surveillance (104) ;
une unité de distribution de logique de surveillance (440) configurée de manière à distribuer, à chacun du au moins un dispositif de surveillance (104) par l'intermédiaire du réseau (110), les une ou plusieurs logiques de surveillance à exécuter par chacun du au moins un dispositif de surveillance (104) ;
une unité de réception de quantité d'exécution (455) configurée de manière à recevoir, en provenance de chacun du au moins un dispositif de surveillance (104) par l'intermédiaire du réseau (110) à l'intervalle de temps prédéterminé ou à chaque nombre de fois prédéterminé où la logique de surveillance appelée est exécutée, la quantité d'exécution de la logique de surveillance dans chacun du au moins un dispositif de surveillance (104) ; et
une unité de traitement de facturation (470) configurée de manière à mettre en oeuvre, pour chacun du au moins un dispositif de surveillance (104), un traitement de facturation conformément à la quantité d'exécution reçue.

5. Système de surveillance (150) selon la revendication 4, dans lequel
l'unité d'enregistrement de dispositif de surveillance (415) est configurée de manière à enregistrer, pour chacun parmi une pluralité de comptes, le au moins un dispositif de surveillance (104) à utiliser dans le compte, et
l'unité de traitement de facturation (470) est configurée de manière à mettre en oeuvre, pour chacun parmi la pluralité de comptes, le traitement de facturation pour le compte sur la base de la quantité d'exécution qui est reçue en provenance de chacun du au moins un dispositif de surveillance (104) utilisé dans le compte.

6. Système de surveillance (150) selon la revendication 4 ou la revendication 5, comprenant en outre :
une unité de support de programmation (420) configurée de manière à supporter une création d'un programme de surveillance qui est exécuté par le dispositif de surveillance (104), dans le but de mettre en oeuvre une surveillance en utilisant la logique de surveillance.

7. Programme qui est exécuté par un ordinateur et amène l'ordinateur à fonctionner comme :
une unité de réception de logique de surveillance (205) configurée de manière à recevoir, en provenance d'un système de surveillance (150) par l'intermédiaire d'un réseau (110), une ou plusieurs logiques de surveillance à exécuter pour analyser une image d'une cible à surveiller ;
une unité de réception de programme de surveillance (203) configurée de manière à recevoir, en provenance du système de surveillance (150) par l'intermédiaire du réseau (110), un programme de surveillance pour réaliser la surveillance en utilisant les une ou plusieurs logiques de surveillance ;
une unité de réception d'image (235) configurée de manière à recevoir une image capturée capturée par une caméra de surveillance (102) ;
une unité d'exécution de programme de surveillance (250) configurée de manière à stocker le programme de surveillance reçu par l'unité de réception de programme de surveillance dans une zone de stockage du dispositif de surveillance (104) et à activer ou à reprendre le programme de surveillance en réponse à la réception de l'image capturée ;
une unité d'extraction d'image (255) configurée de manière à extraire, à partir de l'image capturée capturée par la caméra de surveillance (102), une pluralité d'images cibles à analyser par les une ou plusieurs logiques de surveillance ;
une unité d'exécution de logique de surveillance (270) configurée de manière à stocker les une ou plusieurs logiques de surveillance reçues par l'unité de réception de logique de surveillance (205) dans la zone de stockage du dispositif de surveillance (104), à appeler des logiques de surveillance, parmi les une ou plusieurs logiques de surveillance, pour analyser la pluralité d'images cibles, et à exécuter les logiques de surveillance appelées pour analyser la pluralité d'images cibles ;
une unité de transmission de résultat de surveillance (215) configurée de manière à transmettre, au système de surveillance (150) par l'intermédiaire du réseau (110), un résultat de surveillance obtenu en analysant la pluralité d'images cibles ;
une unité de mesure d'utilisation (280) configurée de manière à mesurer une quantité d'exécution de la logique de surveillance appelée et exécutée par l'unité d'exécution de logique de surveillance (270) ; et
une unité de transmission de quantité d'exécution (220) configurée de manière à transmettre, au système de surveillance (150) par l'intermédiaire du réseau (110) à un intervalle de temps prédéterminé ou à chaque nombre de fois prédéterminé où la logique de surveillance appelée est exécutée, la quantité d'exécution mesurée pour mettre en oeuvre un traitement de facturation conformément à l'exécution de la logique de surveillance appelée, dans lequel
l'unité d'exécution de logique de surveillance (270) est configurée de manière à exécuter, parmi une pluralité de logiques de surveillance, la logique de surveillance en fonction d'un type d'image cible, pour chaque image cible extraite.

8. Programme qui est exécuté par un ordinateur et amène l'ordinateur à fonctionner comme un système de surveillance (150) connecté à au moins un dispositif de surveillance (104) selon l'une quelconque des revendications 1 à 3 pour analyser l'image de la cible à surveiller par l'intermédiaire du réseau (110), le système de surveillance (150) comprenant :
une unité d'enregistrement de logique de surveillance (405) configurée de manière à enregistrer chacune des une ou plusieurs logiques de surveillance, en réponse à la réception des une ou plusieurs logiques de surveillance ;
une unité d'enregistrement de dispositif de surveillance (415) configurée de manière à enregistrer au moins un dispositif de surveillance (104) ;
une unité de distribution de logique de surveillance (440) configurée de manière à distribuer, à chacun du au moins un dispositif de surveillance (104) par l'intermédiaire du réseau (110), les une ou plusieurs logiques de surveillance à exécuter par chacun du au moins un dispositif de surveillance (104) ;
une unité de réception de quantité d'exécution (455) configurée de manière à recevoir, en provenance de chacun du au moins un dispositif de surveillance (104) par l'intermédiaire du réseau (110) à l'intervalle de temps prédéterminé ou à chaque nombre de fois prédéterminé où la logique de surveillance appelée est exécutée, la quantité d'exécution de la logique de surveillance dans chacun du au moins un dispositif de surveillance (104) ; et
une unité de traitement de facturation (470) configurée de manière à mettre en oeuvre, pour chacun du au moins un dispositif de surveillance (104), un traitement de facturation conformément à la quantité d'exécution reçue.

9. Support lisible sur ordinateur sur lequel le programme selon la revendication 7 ou la revendication 8 est enregistré.

10. Procédé comprenant :
recevoir, par un dispositif de surveillance (104) en provenance d'un système de surveillance (150) par l'intermédiaire d'un réseau (110), une ou plusieurs logiques de surveillance à exécuter pour analyser une image d'une cible à surveiller ;
recevoir, par le dispositif de surveillance (104), en provenance du système de surveillance (150) par l'intermédiaire du réseau (110), un programme de surveillance pour réaliser une surveillance en utilisant les une ou plusieurs logiques de surveillance ;
recevoir, par le dispositif de surveillance (104), une image capturée capturée par une caméra de surveillance (102) ;
stocker, par le dispositif de surveillance (104), le programme de surveillance reçu dans une zone de stockage du dispositif de surveillance (104) et activer ou reprendre le programme de surveillance en réponse à la réception de l'image capturée ;
extraire, par le dispositif de surveillance (104), à partir de l'image capturée capturée par la caméra de surveillance (102), une pluralité d'images cibles à analyser par les une ou plusieurs logiques de surveillance ;
stocker, par le dispositif de surveillance (104), une ou plusieurs logiques de surveillance reçues dans la zone de stockage du dispositif de surveillance (104), appeler des logiques de surveillance, parmi les une ou plusieurs logiques de surveillance, pour analyser la pluralité d'images cibles, et exécuter, par le dispositif de surveillance (104), les logiques de surveillance appelées pour analyser la pluralité d'images cibles ;
transmettre, par le dispositif de surveillance (104) au système de surveillance (150) par l'intermédiaire du réseau (110), un résultat de surveillance obtenu en analysant la pluralité d'image cibles ;
mesurer, par le dispositif de surveillance (104), une quantité d'exécution de la logique de surveillance appelée et exécutée ; et
transmettre, par le dispositif de surveillance (104) au système de surveillance (150) par l'intermédiaire du réseau (110) à un intervalle de temps prédéterminé ou à chaque nombre de fois prédéterminé où la logique de surveillance appelée est exécutée, la quantité d'exécution mesurée pour mettre en oeuvre un traitement de facturation conformément à l'exécution de la logique de surveillance appelée, dans lequel
pour chaque image cible extraite, la logique de surveillance correspondant à un type d'image cible, parmi une pluralité de logiques de surveillance, est exécutée.

11. Procédé comprenant :
enregistrer, par un système de surveillance (150) connecté à au moins un dispositif de surveillance (104) selon l'une quelconque des revendications 1 à 3 pour analyser l'image de la cible à surveiller par l'intermédiaire du réseau (110), chacune des une ou plusieurs logiques de surveillance, en réponse à la réception des une ou plusieurs logiques de surveillance ;
enregistrer, par le système de surveillance (150), le au moins un dispositif de surveillance (104) ;
distribuer, par le système de surveillance (150), à chacun du au moins un dispositif de surveillance (104) par l'intermédiaire du réseau (110), les une ou plusieurs logiques de surveillance à exécuter par chacun du au moins un dispositif de surveillance (104) ;
recevoir, par le système de surveillance (150), en provenance de chacun du au moins un dispositif de surveillance (104) par l'intermédiaire du réseau (110) à l'intervalle de temps prédéterminé ou à chaque nombre de fois prédéterminé où la logique de surveillance appelée est exécutée, la quantité d'exécution de la logique de surveillance dans chacun du au moins un dispositif de surveillance (104) ; et
mettre en oeuvre, par le système de surveillance (150), pour chacun du au moins un dispositif de surveillance (104), un traitement de facturation conformément à la quantité d'exécution reçue.
